(19) Europäisches Patentamt
European Patent Office
Office européen des brevets

(11) Veröffentlichungsnummer : **0 189 527**
**B1**

(12) # EUROPÄISCHE PATENTSCHRIFT

(45) Veröffentlichungstag der Patentschrift : **01.02.89**

(51) Int. Cl.[4] : **C 08 G 77/30**

(21) Anmeldenummer : **85113423.9**

(22) Anmeldetag : **23.10.85**

(54) **Organosilansilikatcopolymere und ihre Verwendung in Kühlerfrostschutzmitteln und zur Stabilisierung von Silikaten.**

(30) Priorität : **03.11.84 DE 3440194**

(43) Veröffentlichungstag der Anmeldung : **06.08.86 Patentblatt 86/32**

(45) Bekanntmachung des Hinweises auf die Patenterteilung : **01.02.89 Patentblatt 89/05**

(84) Benannte Vertragsstaaten : **DE FR GB IT SE**

(56) Entgegenhaltungen :
**EP-A- 0 111 013**
**DE-A- 2 912 430**
**US-A- 3 780 127**

(73) Patentinhaber : **BASF Aktiengesellschaft**
**Carl-Bosch-Strasse 38**
**D-6700 Ludwigshafen (DE)**

(72) Erfinder : **Gousetis, Charalampos, Dr.**
**Carl-Bosch-Strasse 98**
**D-6700 Ludwigshafen (DE)**
Erfinder : **Oppenlaender, Knut, Dr.**
**Otto-Dill-Strasse 23**
**D-6700 Ludwigshafen (DE)**
Erfinder : **Liebold, Gert, Dr.**
**Hundert Morgen 37**
**D-6803 Edingen-Neckarhausen (DE)**
Erfinder : **Pfitzner, Klaus, Dr.**
**Liebermannstrasse 6**
**D-6700 Ludwigshafen (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Jouve, 18, rue St-Denis, 75001 Paris, France

## Beschreibung

Die vorliegende Erfindung betrifft neue Organosilan-Silicat-Copolymere, Kühler-Frostschutzmittel auf Glykolbasis, die in geringer Menge diese Verbindungen enthalten, ihre Verwendung als Korrosionsinhibitoren in Kühler-Frostschutzmitteln auf Glykolbasis, ein Verfahren zur Hemmung der Korrosion von Aluminium durch wäßrige Kühlmedien, enthaltend Kühler-Frostschutzmittel auf Glykolbasis, bei der Kühlung von Verbrennungsmotoren sowie die Verwendung von organischen Phosphor-Silicium-Verbindungen zur Stabilisierung von Silicaten.

Wasser als der wichtigsten Kühlflüssigkeit für Verbrennungsmotoren werden üblicherweise Kühler-Frostschutzmittel zugesetzt, die den Erstarrungspunkt herabsetzen und so einen vorbeugenden Schutz zur Sicherung störungsfreier Betriebszustände bei einer Temperatur unterhalb von 0 °C gewähren. Grundlage solcher Kühler-Frostschutzmittel sind Glykole, insbesondere Ethylenglykol und Propylenglykol.

Bei der Verwendung von Kühler-Frostschutzmitteln ist aber der Zusatz von Korrosionsschutzmitteln zwingend erforderlich, da die als Kühlmedium resultierenden Glykol-Wasser-Gemische entgegen reinem Wasser eine erhöhte Neigung zu korrosiven Angriffen auf die im Kühlsystem verwendeten Werkstoffe, z. B. Gußeisen, unlegierter Stahl, Aluminium, Kupfer oder Messing zeigen.

Bei Anwendung der Leichtbauweise durch Verwendung von Aluminium und Aluminiumlegierungen im Kühler- und Motorenbau ist insbesondere bei schnellaufenden Dieselmotoren die Kavitationskorrosion zu verhindern, die lochfraßähnliche Abträge an den Metalloberflächen hinterläßt.

Es ist bekannt, daß Alkalisilicate, beispielsweise Wasserglas oder Natriummetasilicat als Korrosionsinhibitoren für Aluminium eingesetzt werden können. Allerdings ist die Löslichkeit der Alkalisilicate in den Kühler-Frostschutzmitteln auf Basis von Glykol sowie in deren wäßrigen Abmischungen, die dann als Kühlmedium verwendet werden, relativ schlecht.

Um die für den Aluminium-Korrosionsschutz erforderliche Silicatmenge von 250 ppm (berechnet als $SiO_2$ und bezogen auf das unverdünnte, d. h. nicht mit Wasser abgemischte Kühler-Frostschutzmittel) stabil in Lösung zu halten, ist der Zusatz von sogenannten Silicat-Stabilisatoren erforderlich.

Nach dem Vorschlag der DE-A-2 912 430 sollen zur Stabilisierung löslicher Silicate Verbindungen, die das Strukturelement ... $Si—(CH_2)_n—O—P$ ... (n = 1 bis 3) aufweisen, beispielsweise eine Komponente der Formel III

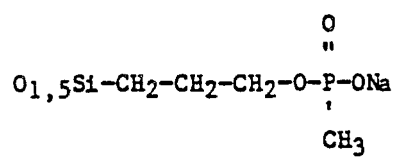

(III)

verwendet werden.

Aus einem dort (loc. cit.) durchgeführten Vergleichsbeispiel (Tabelle A, Probe C) geht hervor, daß das Dinatriumsalz eines Produkts der Formel IV

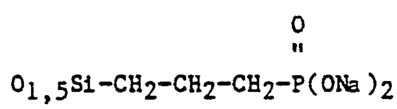

(IV)

bei dem die Propylenkette direkt an das Phosphoratom gebunden ist (d. h. ohne Sauerstoffbrücke) als Silicat-Stabilisator völlig unwirksam ist.

Demgegenüber war es überraschend und für den Fachmann nicht vorhersehbar, daß speziell die Monoalkalisalze von Phosphonsäuremonoestern der zuletzt genannten Verbindungsklasse sowie ihrer Vorstufen (am Silicium- und Phosphoratom vollständig verestert) mit sehr gutem Erfolg zur Stabilisierung von Silicaten herangezogen werden können.

Es wurden neue Organosilan-Silicat-Copolymere gefunden, erhältlich durch Umsetzung organischer Phosphor-Silicium-Verbindungen der allgemeinen Formel I

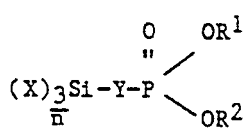

(I)

in der Y einen zweiwertigen aliphatischen oder cycloaliphatischen Rest mit 1 bis 10 Kohlenstoffatomen oder eine Phenylenalkylengruppe mit 7 bis 10 Kohlenstoffatomen bedeutet und n die Werte 1 oder 2 annehmen kann, wobei, wenn n = 1 ist, X für eine $OR^3$-Gruppe, in der $R^3$ eine geradkettige, verzweigte

oder cyclische Alkylkette mit 1 bis 13 Kohlenstoffatomen, die gegebenenfalls durch Sauerstoffatome unterbrochen sein kann oder einen Acylrest mit bis zu 9 Kohlenstoffatomen bedeutet, und $R^1$ und $R^2$ gleich oder verschieden sind und für eine geradkettige, verzweigte oder cyclische Alkylgruppe mit 1 bis 13 Kohlenstoffatomen, die gegebenenfalls durch Sauerstoffatome unterbrochen sein kann, oder eine Aryl- bzw. Aralkylgruppe mit bis zu 20 Kohlenstoffatomen stehen, und wenn n = 2 ist, X ein Sauerstoffatom und $R^1$ ein Alkalimetall bedeuten und $R^2$ die oben genannte Bedeutung besitzt, mit Silicaten der allgemeinen Formel II

$$(MO)_q SiO_{\frac{4-q}{2}} \qquad (II)$$

in der M für ein Alkalimetall und q für eine Zahl von 0,4 bis 4 stehen, im Gewichtsverhältnis von 1 : 1 bis 1 : 10 bei einer Temperatur von 30 bis 150 °C.

Die erfindungsgemäßen Verbindungen eignen sich vorteilhaft als Korrosionsinhibitoren für Kühler-Frostschutzmittel auf Glykolbasis und hemmen vorteilhaft die Korrosion von Aluminium durch wäßrige Kühlmedien, enthaltend Kühler-Frostschutzmittel auf Glykolbasis, bei der Kühlung von Verbrennungsmotoren, wenn man sie in einer Menge von 500 bis 5 000 ppm, bezogen auf das Kühler-Frostschutzmittel, dem Kühler-Frostschutzmittel zusetzt.

Unter Kühler-Frostschutzmittel im Sinne der Erfindung ist die noch nicht mit Wasser vermischte silicathaltige Formulierung auf Glykolbasis zu verstehen.

Solche Kühler-Frostschutzmittel sind allgemein bekannt und beispielsweise in Ullmann « Enzyklopädie der Technischen Chemie », 4. Auflage, Band 12, Seite 205 f. beschrieben.

Zur Hemmung der Korrosion von Aluminium versieht man sie üblicherweise mit Alkalisilicaten der oben genannten Formel II, beispielsweise Alkaliorthosilicate, Alkalimetasilicate, Alkalitetrasilicate und Alkalisilicate. Bevorzugt werden dabei die Natriumverbindungen verwendet.

Diese Silicate werden durch die organischen Phosphor-Silicium-Verbindungen der oben genannten Formel I vorteilhaft stabilisiert.

Die organischen Phosphor-Silicium-Verbindungen der oben genannten Formel I (mit n = 1) können nach bekannten Methoden hergestellt werden :

a) Addition von Dialkylphosphiten an Alkenyltrialkoxysilane in Gegenwart von Radikalbildnern oder

b) Umsetzung von Di- oder Trialkylphosphiten mit Halogenalkyltrialkoxysilanen.

Einige Vertreter dieser Verbindungsklasse sind bekannt und beispielsweise in J. Org. Chem. 25, 1191 (1960), DE-A-2 219 983 und DE-A-2 304 554 (Methode a)) sowie US-A-3 780 127 und US-A-3 816 550 (Methode b)) beschrieben. Weitere Verbindungen finden sich auch in dem Buch « Organosilicon Derivatives of Phosphorus and Sulfur » von S.N. Borisov, M.G. Voronkov und E.Ya. Lukevits, Plenum Press, New York-London 1971, S. 94 f.

Der Rest Y in der oben genannten Formel I stellt, wie oben ausgeführt, einen zweiwertigen aliphatischen oder cycloaliphatischen Rest mit 1 bis 10 Kohlenstoffatomen oder eine Phenylenalkylengruppe mit 7 bis 10 Kohlenstoffatomen dar.

Zweiwertige aliphatische Reste sind geradkettige oder verzweigte Alkylen- oder Alkenylengruppen, z. B. die Methylen-, Ethylen-, Propylen-, Butylen-, Hexylen-, Methylpropylen-, Butenylen- oder Hexenylengruppe.

Als cycloaliphatischer Rest ist beispielsweise die Ethylencyclohexylen- oder Propylencyclohexylengruppe zu nennen.

Phenylalkylengruppe sind z. B. die Phenylenmethylen- oder Phenylenethylengruppe.

Die bevorzugte Bedeutung von Y sind geradkettige oder verzweigte Alkylengruppen mit 1 bis 6 Kohlenstoffatomen, wobei die Ethylen-, Propylen-, Butylen- und Isobutylengruppe besonders bevorzugt sind.

Die bevorzugte Bedeutung von $R^3$ in der Formel I (n = 1) sind Alkylgruppen mit 1 bis 4 Kohlenstoffatomen.

$R^1$ und $R^2$ in Formel I (n = 1) stehen vorzugsweise ebenfalls für Alkylgruppen mit 1 bis 4 Kohlenstoffatomen.

Wenn n = 2 ist, bedeutet $R^1$ vorzugsweise Natrium oder Kalium.

Zu den organischen Phosphor-Silicium-Verbindungen der Formel I mit n = 2 gelangt man über die oben beschriebenen Phosphor-Silicium-Verbindungen der Formel I mit n = 1, die das Strukturelement $(R^3O)_3Si—$ aufweisen. Man erhält sie durch Umsetzung in wäßriger Alkalihydroxidlösung bei einer Temperatur von 70 bis 100 °C über einen Zeitraum von 10 bis 20 Stunden. Bei diesen Verbindungen handelt es sich um Phosphonoalkylsiloxane.

Die erfindungsgemäßen Organosilan-Silicat-Copolymeren können entweder in situ bei der Herstellung der Kühler-Frostschutzmittel-Formulierung durch Reaktion der dort vorhandenen Alkalisilicate mit den organischen Phosphor-Silicium-Verbindung gemäß Formel I im Gewichtsverhältnis von 1 : 1 bis 10 : 1, vorzugsweise 2 : 1 bis 8 : 1 gebildet werden oder lassen sich auch vorher separat herstellen.

In diesem Fall wird das Alkalisilicat mit der organischen Phosphor-Silicium-Verbindung gemäß Formel I in den entsprechenden Mengen versetzt und bei einer Temperatur von 30 bis 150 °C,

vorzugsweise 30 bis 80 °C, in Glykol oder Wasser oder auch in einer Glykol-Wasser-Mischung über einen Zeitraum von 5 bis 10 Stunden gerührt. Das resultierende Organosilan-Silicat-Copolymere, dessen Silicat-Anteil im Bereich von ca. 50 bis 90 Gew.%, vorzugsweise 65 bis 90 Gew.%, jeweils bezogen auf die Summe der beiden Reaktionspartner, liegt, kann dann zur Kühler-Frostschutzmittel-Formulierung, die die übrigen Komponenten enthält, gegeben werden.

Die neuen Organosilan-Silicat-Copolymeren werden dem Kühler-Frostschutzmittel in einer Menge von 500 bis 5 000 ppm, insbesondere 200 bis 800 ppm, jeweils bezogen auf das Kühler-Frostschutzmittel zugesetzt.

Die Kühler-Frostschutzmittel können dabei weitere an sich bekannte Korrosionsinhibitoren beispielsweise Borate, Nitrite, Nitrate oder Benzoate sowie Antischaummittel oder andere Hilfsmittel enthalten (vgl. Ullmann, loc. cit.).

Zur Bereitung der Kühlmedien versetzt man die erfindungsgemäßen Kühler-Frostschutzmittel mit Wasser und stellt so zweckmäßig 20 bis 50 vol.%ige wäßrige Lösungen her.

Die erfindungsgemäßen Produkte zeigen hervorragende Wirkung als Korrosionsinhibitoren von Aluminium und die neuen Kühler-Frostschutzmittel zeichnen sich sowohl in unverdünntem Zustand als auch in wäßriger Lösung durch eine vorteilhafte Silicat-Stabilität aus.

Die nachfolgenden Beispiele sollen die Erfindung näher erläutern.

## Beispiele

Es wurde ein Kühler-Frostschutzmittel formuliert, das wie folgt zusammengesetzt war (Angabe in Gew.%) :

| | |
|---|---|
| Ethylenglykol | 92,0 |
| Wasser | 2,9 |
| Borax ($Na_2B_4O_7 \cdot 5H_2O$) | 1,7 |
| Natriumnitrat | 0,4 |
| Natriumnitrit | 0,5 |
| Natriumbenzoat | 2,0 |
| Natrimetasilicat ($Na_2SiO_3 \cdot 5H_2O$) | 0,3 |
| Natriumhydroxid | 0,05 |
| Toluoltriazol | 0,1 |
| Organische Phosphor-Silicium-Verbindung* | 0,05 |

*Als organische Phosphor-Silicium-Verbindung diente ein Produkt mit folgender Strukturformel :

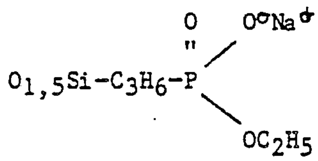

Die Bildung des Organosilan-Silicat-Copolymeren erfolgte dabei in situ durch Umsetzung mit dem vorhandenen Natriummetasilicat.

Der Nachweis der Silicat-Stabilität erfolgte durch Lagerversuche bei einer Temperatur von 80 °C. Die Lagerung wurde sowohl mit den formulierten unverdünnten Kühler-Frostschutzmittel als auch in wäßriger Lösung (50 bis 33 vol.%ige wäßrige Lösung) durchgeführt.

Das hierzu verwendete Wasser entsprach demjenigen, welches im Kühler-Frostschutzmittel-Korrosionsversuch gemäß ASTM 1384 verwendet wird, d. h. es enthielt jeweils 100 ppm Chlorid, Sulfat und Bicarbonat (man verwendete die Natriumsalze) sowie 275 ppm Calciumchlorid. (Wasser, das diese Komponenten enthält wird auch in den Hartwasser-Verträglichkeitsprüfungen für Kühler-Frostschutzmittel von verschiedenen Kraftfahrzeugherstellern verwendet.)

Die Beurteilung des Lagerversuchs erfolgte visuell. Das Auftreten von kompakten oder flüssigen Sedimenten in der Flüssigkeit und die Bildung von gelartigen Ablagerungen am Glas wurden negativ beurteilt.

Der Versuch wurde nach 28 Tagen beendet. Folgende Ergebnisse wurden erhalten :

## Beispiel 1

| | | Sediment- bzw. Gelbildung | |
|---|---|---|---|
| a) | Reines Kühler-Frostschutzmittel mit Organosilan-Silicat-Copolymeren | nach 28 Tagen | keine |
| b) | 50 vol.%ige wäßrige Lösung | nach 28 Tagen | keine |
| c) | 33 vol.%ige wäßrige Lösung | nach 28 Tagen | keine |

Beispiel 2 (Vergleich)

| | | | |
|---|---|---|---|
| a) Reines Kühler-Frostschutzmittel ohne Organosilan-Silicat-Copolymeren | nach | 7 Tagen | vorhanden |
| b) 50 vol.%ige wäßrige Lösung | nach | 2 Tagen | vorhanden |
| c) 22 vol.%ige wäßrige Lösung | nach | 1 Tag | vorhanden |

Die Proben ohne Sediment- bzw. Gelbildung (Beispiel 1) enthielten noch 100 % des ursprünglich vorhandenen Silicats (als $SiO_2$ berechnet). Trat Sediment- bzw. Gelbildung ein (Beispiel 2), so war der Wert auf 50 % des Ausgangswerts abgesunken.

Die wäßrigen Lösungen (Beispiel 1b) und 1c)) genügten auch den Anforderungen im Korrosionsversuch gemäß ASTM 1384. Im folgenden ist die gemessene Gewichtszu- oder -abnahme (in $g/m^2$) der in diesem Test verwendeten Metallcoupons für die wäßrige Lösung gemäß Beispiel 1c) angegeben :

| | |
|---|---|
| Kupfer | —0,1 |
| Weichlot | +0,3 |
| Messing | —0,2 |
| Stahl | +0,1 |
| Grauguß | —0,3 |
| Gußaluminium | —0,2 |

## Patentansprüche

1. Organosilan-Silicat-Copolymere, erhältlich durch Umsetzung organischer Phosphor-Silicium-Verbindungen der allgemeinen Formel I

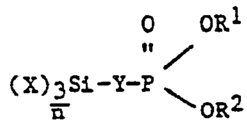

(I)

in der Y einen zweiwertigen aliphatischen oder cycloaliphatischen Rest mit 1 bis 10 Kohlenstoffatomen oder eine Phenylenalkylengruppe mit 7 bis 18 Kohlenstoffatomen bedeutet und n die Werte 1 oder 2 annehmen kann, wobei, wenn n = 1 ist, X für eine $OR^3$-Gruppe, in der $R^3$ eine geradkettige, verzweigte oder cyclische Alkylgruppe mit 1 bis 13 Kohlenstoffatomen, die gegebenenfalls durch Sauerstoffatome unterbrochen sein kann oder einen Acylrest mit bis zu 9 Kohlenstoffatomen bedeutet, und $R^1$ und $R^2$ gleich oder verschieden sind und für eine geradkettige, verzweigte oder cyclische Alkylgruppe mit 1 bis 13 Kohlenstoffatomen, die gegebenenfalls durch Sauerstoffatomen unterbrochen sein kann, oder eine Aryl- bzw. Aralkylgruppe mit bis zu 20 Kohlenstoffatomen, stehen, und wenn n = 2 ist, X ein Sauerstoffatom und $R^1$ ein Alkalimetall bedeuten und $R^2$ die oben genannte Bedeutung besitzt, mit Silicaten der allgemeinen Formel

$$(MO)_q SiO_{\frac{4-q}{2}} \qquad (II)$$

in der M für ein Alkalimetall und q für eine Zahl von 0,4 bis 4 stehen, im Gewichtsverhältnis von 1 : 1 bis 1 : 10 bei einer Temperatur von 30 bis 150 °C.

2. Organosilan-Silicat-Copolymere gemäß Anspruch 1, erhältlich durch Umsetzung einer Verbindung der Formel I gemäß Anspruch 1, in der Y eine geradkettige oder verzweigte Alkylengruppe mit 1 bis 6 Kohlenstoffatomen bedeutet und wenn n = 1 ist, $R^1$, $R^2$ und $R^3$ jeweils eine Alkylgruppe mit 1 bis 4 Kohlenstoffatomen darstellen, und wenn n = 2 ist, $R^1$ für Natrium oder Kalium steht, mit den genannten Silicaten der Formel II.

3. Kühler-Frostschutzmittel auf Glykolbasis, enthaltend in einer Menge von 500 bis 5 000 ppm, bezogen auf das Kühler-Frostschutzmittel, Organosilan-Silicat-Copolymere, die, gemäß Anspruch 1, durch Umsetzung organischer Phosphor-Silicium-Verbindungen der allgemeinen Formel I mit Silicaten der allgemeinen Formel II erhältlich sind.

4. Kühler-Frostschutzmittel auf Glykolbasis, enthaltend Organosilan-Silicat-Copolymere gemäß Anspruch 2.

5. Kühler-Frostschutzmittel gemäß Anspruch 3, bei denen die Organosilan-Silicat-Copolymeren durch Umsetzung der organischen Phosphor-Silicium-Verbindung der Formel I mit den Silicaten der Formel II in situ im Kühler-Frostschutzmittel erhältlich sind.

6. Kühler-Frostschutzmittel gemäß Anspruch 3, bei denen die Organosilan-Silicat-Copolymeren durch Umsetzung der organischen Phosphor-Silicium-Verbindungen der Formel I mit den Silicaten der Formel II in einer separaten Stufe erhältlich sind.

7. Verwendung von Organosilan-Silicat-Copolymeren, die, gemäß Anspruch 1, durch Umsetzung organischer Phosphor-Silicium-Verbindungen der allgemeinen Formel I mit Silicaten der allgemeinen Formel II erhältlich sind, als Korrosionsinhibitoren für Kühler-Frostschutzmittel auf Glykolbasis.

8. Verwendung von Organosilan-Silicat-Copolymeren gemäß Anspruch 7, die durch Umsetzung organischer Phosphor-Silicium-Verbindungen der Formel I, in der Y eine geradkettige oder verzweigte Alkylengruppe mit 1 bis 6 Kohlenstoffatomen bedeutet und wenn n = 1 ist, $R^1$, $R^2$ und $R^3$ jeweils eine Alkylgruppe mit 1 bis 4 Kohlenstoffatomen darstellen, und wenn n = 2 ist, $R^1$ für Natrium oder Kalium steht, mit den genannten Silicaten der Formel II erhältlich sind.

9. Verwendung von Organosilan-Silicat-Copolymeren gemäß Anspruch 7, die durch Umsetzung der organischen Phosphor-Silicium-Verbindungen der Formel I mit den Silicaten der Formel II in situ im Kühler-Frostschutzmittel erhältlich sind.

10. Verwendung von Organosilan-Silicat-Copolymeren gemäß Anspruch 7, die durch Umsetzung der organischen Phosphor-Silicium-Verbindungen der Formel I mit den Silicaten der Formel II in einer separaten Stufe erhältlich sind.

11. Verwendung von organischen Phosphor-Silicium-Verbindungen der allgemeinen Formel I entsprechend Anspruch 1 zur Stabilisierung von Silicaten in Kühler-Frostschutzmitteln auf Glykolbasis.

12. Verwendung von organischen Phosphor-Silicium-Verbindungen der Formel I gemäß Anspruch 11, in der Y eine geradkettige oder verzweigte Alkylengruppe mit 1 bis 6 Kohlenstoffatomen bedeutet und wenn n = 1 ist, $R^1$, $R^2$ und $R^3$ jeweils eine Alkylgruppe mit 1 bis 4 Kohlenstoffatomen darstellen, und wenn n = 2 ist, $R^1$ für Natrium oder Kalium steht.

13. Verfahren zur Hemmung der Korrosion von Aluminium durch wäßrige Kühlmedien, enthaltend Kühler-Frostschutzmittel auf Glykolbasis, bei der Kühlung von Verbrennungsmotoren, dadurch gekennzeichnet, daß man die wäßrigen Kühlmedien mit 500 bis 5 000 ppm, bezogen auf das Kühler-Frostschutzmittel, Organosilan-Silicat-Copolymeren versetzt, die gemäß Anspruch 1 durch Umsetzung organischer Phosphor-Silicium-Verbindungen der allgemeinen Formel I mit Silicaten der allgemeinen Formel II erhältlich sind.

14. Verfahren gemäß Anspruch 13, dadurch gekennzeichnet, daß man die Kühlmedien mit Organosilan-Silicat-Copolymeren gemäß Anspruch 2 versetzt.

15. Verfahren gemäß Anspruch 13, dadurch gekennzeichnet, daß man Organosilan-Silicat-Copolymere zusetzt, die durch Umsetzung der organischen Phosphor-Silicium-Verbindung der Formel I mit den Silicaten der Formel II in situ im Kühler-Frostschutzmittel erhältlich sind.

16. Verfahren gemäß Anspruch 13, dadurch gekennzeichnet, daß man Organosilan-Silicat-Copolymere verwendet, die durch Umsetzung der organischen Phosphor-Silicium-Verbindungen der Formel I mit den Silicaten der Formel II in einer separaten Stufe erhältlich sind.

## Claims

1. An organosilane/silicate copolymer obtainable by reacting an organic phosphosilicon compound of the formula I

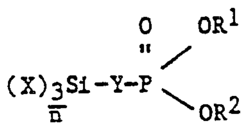

(I)

where Y is a divalent aliphatic or cycloaliphatic radical of 1 to 10 carbon atoms or a phenylenealkylene group of 7 to 10 carbon atoms and n can be 1 or 2, and when n is 1, X is an $OR^3$ group in which $R^3$ is a straight-chain, branched or cyclic alkyl group of 1 to 13 carbon atoms which may be interrupted by oxygen atoms or is acyl of not more than 9 carbon atoms, and $R^1$ and $R^2$ are identical or different and are each a straight-chain, branched or cyclic alkyl group of 1 to 13 carbon atoms which may be interrupted by oxygen atoms, or is an aryl or aralkyl group of not more than 20 carbon atoms, and when n is 2, X is oxygen and $R^1$ is an alkali metal and $R^2$ has the above meanings, with a silicate of the formula

$$(MO)_q SiO_{\frac{4-q}{2}} \qquad (II)$$

where M is an alkali metal and q is from 0.4 to 4, in a weight ratio of from 1 : 1 to 1 : 10 at from 30 to 150 °C.

2. An organosilane/silicate copolymer as claimed in claim 1 obtainable by reacting a compound of the formula I as claimed in claim 1, where Y is a straight-chain or branched alkylene group of 1 to 6 carbon

atoms and, when n is 1, $R^1$, $R^2$ and $R^3$ are each alkyl of 1 to 4 carbon atoms, and, when n is 2, $R^1$ is sodium or potassium, with one of the stated silicates of the formula II.

3. A radiator antifreeze based on glycol, containing from 500 to 5 000 ppm, based on the said antifreeze, of an organosilane/silicate copolymer which, as claimed in claim 1, is obtainable by reacting an organic phosphosilicon compound of the formula I with a silicate of the formula II.

4. A radiator antifreeze based on glycol, containing an organosilane/silicate copolymer as claimed in claim 1.

5. A radiator antifreeze as claimed in claim 3, where in the organosilane/silicate copolymer is obtained by reacting an organic phosphosilicon compound of the formula I with a silicate of the formula II in situ in the radiator antifreeze.

6. A radiator antifreeze as claimed in claim 3, wherein the organosilane/silicate copolymer is obtainable by reacting an organic phosphosilicon compound of the formula I with a silicate of the formula II in a separate stage.

7. Use of an organosilane/silicate copolymer which, as claimed in claim 1, is obtainable by reacting an organic phosphosilicon compound of the formula I with a silicate of the formula II as a corrosion inhibitor for a radiator antifreeze based on glycol.

8. Use of an organosilane/silicate copolymer as claimed in claim 7, which is obtainable by reacting an organic phosphosilicon compound of the formula I, where Y is a straight-chain or branched alkylene group of 1 to 6 carbon atoms, and when n is 1, $R^1$, $R^2$ and $R^3$ are each alkyl of 1 to 4 carbon atoms, and when n is 2, $R^1$ is sodium or potassium, with one of the stated silicates of the formula II.

9. Use of an organosilane/silicate copolymer as claimed in claim 7, which is obtainable by reacting an organic phosphosilicon compound of the formula I with a silicate of the formula II in situ in the radiator antifreeze.

10. Use of an organosilane/silicate copolymer as claimed in claim 7, which is obtainable by reacting an organic phosphosilicon compound of the formula I with a silicate of the formula II in a separate stage.

11. Use of an organic phosphosilicon compound of the formula I corresponding to claim 1 for stabilizing silicates in radiator antifreezes based on glycol.

12. Use of an organic phosphosilicon compound of the formula I as claimed in claim 11, where Y is a straight-chain or branched alkylene group of 1 to 6 carbon atoms and, when n is 1, $R^1$, $R^2$ and $R^3$ are each alkyl of 1 to 4 carbon atoms and, when n is 2, $R^1$ is sodium or potassium.

13. Method of inhibiting corrosion of aluminum by an aqueous cooling medium containing a radiator antifreeze based on glycol during the cooling of an internal combustion engine, wherein from 500 to 5 000 ppm, based on the said antifreeze, of an organosilane/silicate copolymer which, as claimed in claim 1, is obtainable by reacting an organic phosphosilicon compound of the formula I with a silicate of the formula II is added to the aqueous cooling medium.

14. A method as claimed in claim 13, wherein an organosilane/silicate copolymer as claimed in claim 2 is added to the cooling medium.

15. A method as claimed in claim 13, wherein the organosilane/silicate copolymer added is obtainable by reacting an organic phosphosilicon compound of the formula I with a silicate of the formula II in situ in the radiator antifreeze.

16. A method as claimed in claim 13, wherein the organosilane/silicate copolymer used is obtainable by reacting an organic phosphosilicon compound of the formula I with a silicate of the formula II in a separate stage.

**Revendications**

1. Copolymères organosilane/silicate, que l'on peut obtenir par réaction de composés organiques phosphore/silicium de formule générale I

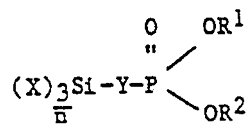

(I)

dans laquelle Y est mis pour un reste bivalent aliphatique ou cycloaliphatique ayant de 1 à 10 atomes de carbone ou un reste phénylènealkylène ayant de 7 à 18 atomes de carbone et n peut avoir la valeur 1 ou 2, quand n est 1, X étant mis pour un groupement $OR^3$ où $R^3$ représente un groupement alkyle linéaire, ramifié ou cyclique ayant de 1 à 13 atomes de carbone, qui peut éventuellement être interrompu par un atome d'oxygène, ou un reste acyle ayant jusqu'à 9 atomes de carbone, et $R^1$ et $R^2$ sont identiques ou différents et sont mis pour un groupement alkyle linéaire, ramifié ou cyclique ayant de 1 à 13 atomes de carbone, qui peut éventuellement être interrompu par un atome d'oxygène, ou pour un groupement aryle ou aralkyle ayant de 1 à 20 atomes de carbone et quand n est 2, X représentant un atome d'oxygène et $R^1$ un métal alcalin, et $R^2$ a la signification décrite précédemment, avec des silicates de formule générale

$$(MO)_q SiO_{\frac{4-q}{2}} \quad (II)$$

dans laquelle M est mis pour un métal alcalin et q pour un nombre de 0,4 à 4, dans une proportion pondérale de 1 : 1 à 1 : 10 à une température de 30 à 150 °C.

2. Copolymères organosilane/silicate selon la revendication 1, que l'on peut préparer par réaction d'un composé de formule I selon la revendication 1, dans lequel Y représente un groupement alkylène à chaîne droite ou ramifiée ayant de 1 à 6 atomes de carbone et quand n est 1, $R^1$, $R^2$ et $R^3$ représentant chacun un groupement alkyle ayant de 1 à 4 atomes de carbone, et quand n est 2, $R^1$ représentant le sodium ou le potassium, avec les silicates indiqués de formule II.

3. Milieu antigel pour radiateurs à base de glycol, contenant à raison de 500 à 5 000 ppm, par rapport au milieu antigel pour radiateur, des copolymères organosilane/silicate qui, selon la revendication 1, ont été préparés par réaction de composés organiques phosphore/silicium de formule générale I avec des silicates de formule générale II.

4. Milieu antigel pour radiateurs à base de glycol, contenant des copolymères organosilane/silicate selon la revendication 2.

5. Milieu antigel pour radiateurs selon la revendication 3, dans lequel les copolymères organosilane/silicate ont été préparés in situ dans le milieu antigel pour radiateurs par réaction du composé organique phosphore/silicium de formule I avec les silicates de formule II.

6. Milieu antigel pour radiateurs selon la revendication 3, dans lequel les copolymères organosilane/silicate ont été préparés dans une étape distincte, par réaction des composés organiques phosphore/silicium de formule I avec les silicates de formule II.

7. Utilisation de copolymères organosilane/silicate qui, selon la revendication 1, ont été préparés par réaction de composés organiques phosphore/silicium de formule générale I avec des silicates de formule générale II, en tant qu'inhibiteurs de corrosion pour les milieux antigel pour radiateurs à base de glycol.

8. Utilisation de copolymères organosilane/silicate selon la revendication 7, qui ont été préparés par réaction de composés organiques phosphore/silicium de formule I, dans laquelle Y représente un groupement alkylène linéaire ou ramifié ayant de 1 à 6 atomes de carbone et quand n est 1, $R^1$, $R^2$ et $R^3$ étant mis chacun pour un groupement alkyle ayant de 1 à 4 atomes de carbone, et quand n est 2, $R^1$ représentant un atome de sodium ou de potassium, avec les silicates indiqués de formule II.

9. Utilisation de copolymères organosilane/silicate selon la revendication 7, qui ont été préparés par réaction in situ dans le milieu antigel pour radiateurs des composés organiques phosphore/silicium de formule I avec les silicates de formule II.

10. Utilisation de copolymères organosilane/silicate selon la revendication 7, qui ont été préparés par réaction dans une étape séparée des composés organiques phosphore/silicium de formule I avec les silicates de formule II.

11. Utilisation de composés organiques phosphore/silicium de formule générale I conforme à la revendication 1, pour la stabilisation de silicates dans des agents antigel pour radiateurs à base de glycol.

12. Utilisation de composés organiques phosphore/silicium de formule I selon la revendication 11, où Y représente un groupement alkylène linéaire ou ramifié ayant de 1 à 6 atomes de carbone et quand n est 1, $R^1$, $R^2$ et $R^3$ représentant chacun un groupement alkyle ayant de 1 à 4 atomes de carbone, et quand n est 2, $R^1$ représentant un atome de sodium ou de potassium.

13. Procédé pour inhiber la corrosion de l'aluminium par des milieux réfrigérants aqueux, contenant un milieu antigel pour radiateurs à base de glycol, pour le refroidissement de moteurs à combustion interne, caractérisé en ce qu'on ajoute aux milieux réfrigérants aqueux de 500 à 5 000 ppm, par rapport à l'agent antigel pour radiateurs, de copolymères organosilane/silicate qui ont été préparés selon la revendication 1 par réaction de composés organiques phosphore/silicium de formule générale I avec des silicates de formule générale II.

14. Procédé selon la revendication 13, caractérisé en ce que l'on ajoute au milieu réfrigérant des copolymères organosilane/silicate selon la revendication 2.

15. Procédé selon la revendication 13, caractérisé en ce que l'on ajoute des copolymères organosilane/silicate qui ont été préparés par réaction du composé organique phosphore/silicium de formule I avec les silicates de formule II in situ dans le milieu antigel pour radiateurs.

16. Procédé selon la revendication 13, caractérisé en ce qu'on utilise des copolymères organosilane/silicate qui ont été préparés par réaction dans une étape séparée des composés organiques phosphore/silicium de formule I avec les silicates de formule II.